# EUROPÄISCHE PATENTSCHRIFT

(11) **EP 3 995 207 B1**
(45) Veröffentlichungstag und Bekanntmachung des Hinweises auf die Patenterteilung: **07.06.2023**
(21) Anmeldenummer: 20206147.9
(22) Anmeldetag: 06.11.2020
(51) Int. Cl.: B01J 19/24, B01J 8/06, F16L 53/34, H05B 6/10

(54) **REAKTOR ZUR DURCHFÜHRUNG EINER CHEMISCHEN REAKTION**
REACTOR FOR CARRYING OUT A CHEMICAL REACTION
RÉACTEUR PERMETTANT DE RÉALISER UNE RÉACTION CHIMIQUE

(43) Veröffentlichungstag der Anmeldung: 11.05.2022
(73) Patentinhaber: Linde GmbH, 82049 Pullach (DE); BASF SE, 67056 Ludwigshafen am Rhein (DE)
(72) Erfinder: Hofstätter, Martin, 81369 München (DE); Delhomme-Neudecker, Dr. Clara, 81825 München (DE); Posselt, Dr. Heinz, 83043 Bad Aibling (DE); Zellhuber, Dr. Mathieu, 82152 Martinsried (DE)
(74) Vertreter: Reuß, Stephanie

(56) Entgegenhaltungen:
- EP-A1- 3 075 704
- WO-A1-2015/197181
- US-A1- 2012 328 269

## Beschreibung

Die Erfindung betrifft einen Reaktor zur Durchführung einer chemischen Reaktion in einem Prozessfluid unter Verwendung mehrphasigen Wechselstroms zur Erhitzung des Prozessfluids.

### Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Gegenwärtig steigt die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Die WO 2015/197181 A1 offenbart einen Reaktor, in dem ein durch eine Rohrleitung fließendes Fluid erhitzt wird, wobei die elektrisch leitfähige Rohrleitung mit mehreren Phasen einer Wechselstromquelle verbunden ist, so dass Sternpunktschaltung gebildet wird und entsprechend dem elektrischen Widerstand der Rohrleitung Wärme erzeugt wird.

Konstruktiv sind dabei die beheizte Rohrlänge und damit auch der ohmsche Widerstand begrenzt. Die Folge ist eine Stromversorgung bei hoher Stromstärke und niedriger Spannung, um die benötigte Heizleistung in die Rohrleitung einbringen zu können, so dass mechanisch und werkstofftechnisch komplexe Hochstromzuführungen benötigt werden.

### Offenbarung der Erfindung

Diese Aufgabe wird gelöst durch einen Reaktor zur Durchführung einer chemischen Reaktion mit den Merkmalen des unabhängigen Anspruchs.

Die Erfindung bedient sich dabei der Maßnahme, jedes Reaktionsrohr mit nur einer Phase zu verbinden und einen Phasenausgleich über mehrere Reaktionsrohre herzustellen. Die je Phase beheizte Länge, und damit der Widerstand, in einem Reaktionsrohr erhöht sich somit gegenüber einer Anordnung, bei der ein Reaktionsrohr mit mehreren Phasen verbunden ist. Dies ermöglicht bei konstanter Stromstärke einen höheren Leistungseintrag (da P = R·I², wobei P: Leistung, R: Widerstand, I: Stromstärke), der über eine Erhöhung der Spannung realisiert werden kann. Da für jedes Reaktionsrohr lediglich eine Stromzuführung über ein jeweiliges Einspeiseelement erfolgt, können die Anzahl technisch aufwendiger Hochstromzuführungen und die darin auftretenden Leistungsverluste reduziert werden.

Der Reaktor zur Durchführung einer chemischen Reaktion in einem Prozessfluid unter Verwendung mehrphasigen Wechselstroms zur Erhitzung des Prozessfluids, wobei der Wechselstrom eine Anzahl M von Phasen aufweist, wobei M eine ganze Zahl größer eins ist, umfasst einen durch eine thermisch isolierende Reaktorwand gebildeten Reaktorbehälter und wenigstens eine Gruppe mit mehreren Reaktionsrohren, wobei jede Gruppe M Reaktionsrohre umfasst, wobei jedes der Reaktionsrohre einen elektrisch beheizbaren Heizabschnitt aufweist, der sich mit einer jeweiligen Heizlänge zwischen einem ersten und einem zweiten Abnahmebereich des jeweiligen Reaktionsrohrs erstreckt, wobei die Heizabschnitte zumindest für 95 % ihrer Heizlänge innerhalb des Reaktorbehälters angeordnet sind und in einem Bereich, der sich von 20 % bis 80 % ihrer Heizlänge erstreckt, jeweils einen Einspeisebereich aufweisen. Die Prozentangaben in der Angabe "20 % bis 80 %" beziehen sich auf die Position innerhalb der Heizlänge, d.h. 0 % bezeichnet die Position des ersten (oder zweiten) Abnahmebereichs, 50 % die Mitte des Heizabschnitts und 100 % die Position des zweiten (bzw. ersten) Abnahmebereichs (es ist also kein Anteil gemeint).

An den Einspeisebereichen, die über die Einspeiseelemente mit der Stromversorgung verbunden sind, wird jeweils eine Phase des Wechselstroms in die Heizabschnitte eingespeist bzw. zugeführt, d.h. eine der jeweiligen Phase entsprechende Wechselspannung angelegt. An den Abnahmebereichen, die über die Abnahmeelemente mit den Sternbrücken verbunden sind, wird die jeweilige Phase des Wechselstroms aus den Heizabschnitten abgenommen bzw. abgeführt. Über die Sternbrücken erfolgt ein Phasenausgleich der verschiedenen Phasen des Wechselstroms.

Dass die Reaktionsrohre elektrisch beheizbar sind bzw. einen elektrisch beheizbaren Heizabschnitt aufweisen, heißt, dass als Material für die Reaktionsrohre und insbesondere der Heizabschnitte ein Material mit einer elektrischen Leitfähigkeit verwendet, das bzw. die für ein elektrisches Heizen geeignet ist. Beispiele sind hitzebeständige Stahllegierungen, insbesondere hitzebeständige Chrom-Nickel-Stahllegierungen. Solche Stahllegierungen können ebenfalls für die Stromanschlüsse (über die die elektrischen Ströme in den Reaktorbehälter geleitet werden), d.h. die Einspeiseelemente und die Abnahmeelemente, verwendet werden. Beispielsweise können Materialien mit den Normbezeichnungen GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, oder GX55NiCrWZr33-30-04 gemäß DIN EN 10027, Teil 1, "Werkstoffe", verwendet werden.

Die Reaktorwand umschließt einen Bereich, der in alle Raumrichtungen von mindestens einer Reaktorwand umgeben wird. Im Allgemeinen wird die Reaktorwand durch mehrere einzelne Wände gebildet, die so zusammengefügt sind, dass sie einen Bereich umschließen; es könnte also auch von einer Gruppe von Reaktorwänden gesprochen werden, vereinfachend wird allerdings der Begriff "Reaktorwand" benutzt. Der umschlossene Bereich, und damit auch die Reaktorwand, kann eine beliebige volumetrische Form aufweisen, bevorzugt jedoch die eines viereckigen Prismas. Die Reaktorwand kann abgedichtete konstruktive Elemente aufweisen (wie Durchführungen oder Sichtfenster), jedoch auch dauerhaft geöffnete und/oder verschließbare Öffnungen als Verbindung zu anderen Anlagenteilen, bevorzugt zur Konditionierung der Atmosphäre innerhalb der Reaktorwand, z.B. Einlassstutzen für Inertgas oder Auslassöffnung zu einem Kamintrakt.

Durch die Reaktorwand wird der Reaktorbehälter (der auch als Reaktorbox bezeichnet werden kann) gebildet, d.h. die Reaktorwand stellt die Wand bzw. die Wände des Reaktorbehälters dar. Entsprechend ist der Begriff "Reaktorwand" hier nicht im Sinne eines Tanks für das Prozessfluid zu verstehen. Der von der Reaktorwand umschlossene Bereich ist das Innere des Reaktorbehälters. Der Bereich innerhalb des Reaktorbehälters (d.h. im Inneren des Reaktorbehälters) wird in der weiteren Beschreibung der Einfachheit halber auch als "innerhalb der Reaktorwand" bezeichnet. Der Ausdruck "innerhalb der Reaktorwand" bedeutet also innerhalb des von der Reaktorwand umschlossenen Bereichs. Ebenso wird der Bereich außerhalb des Reaktorbehälters auch als "außerhalb der Reaktorwand" bezeichnet.

Durch die Reaktorwand werden thermische Verluste reduziert und die Umgebung des Reaktorbehälters bzw. des Reaktors vor Hitze geschützt. Entsprechend sollte sich die Heizlänge im Wesentlichen innerhalb des von der Reaktorwand umschlossenen Bereichs, d.h. im Inneren des Reaktorbehälters befinden, erfindungsgemäß zumindest für 95 %, bevorzugt zumindest für 98 %, weiter bevorzugt zu 100 % (also Heizabschnitte vollständig innerhalb des von der Reaktorwand umschlossenen Bereichs). Diese Anordnung ist vorzugsweise symmetrisch ausgeführt, d.h. falls vorhanden (Heizabschnitte nicht zu 100 % innerhalb des von der Reaktorwand umschlossenen Bereichs), sind diejenigen Abschnitte der Heizabschnitte, die außerhalb des Reaktorbehälters liegen, bezüglich der Heizlänge symmetrisch angeordnet. Insbesondere die Abnahmebereiche können außerhalb der Reaktorwand liegen.

Der Einspeisebereich ist jeweils bevorzugt in einem Bereich der Heizabschnitte, der sich von 30 % bis 70 % ihrer Heizlänge erstreckt, angeordnet, weiter bevorzugt in einem Bereich der Heizabschnitte, der sich von 40 % bis 60 % ihrer Heizlänge erstreckt, angeordnet, und am meisten bevorzugt in einem Bereich der Heizabschnitte, der sich von 45 % bis 55 % ihrer Heizlänge erstreckt, angeordnet. Dies entspricht einer symmetrischen Aufteilung der Ströme von den Einspeisebereichen zu den ersten und den zweiten Abnahmebereichen.

Der Reaktor umfasst weiterhin elektrisch leitende Einspeiseelemente, wobei jeder Gruppe M Einspeiseelemente zugeordnet sind, die mit den Einspeisebereichen der Gruppe elektrisch leitend verbunden sind, wobei in verschiedene einer Gruppe zugeordnete Einspeiseelemente verschiedene Phasen des Wechselstroms eingespeist werden oder einspeisbar sind. Die Einspeiseelemente erstrecken sich durch die Reaktorwand und stellen im Prinzip Stromzuführungen bzw. Stromanschlüsse dar. Der Reaktor umfasst außerdem elektrisch leitende erste und zweite Abnahmeelemente, wobei jeder Gruppe M erste Abnahmeelemente und M zweite Abnahmeelemente zugeordnet sind, die mit den ersten Abnahmebereichen bzw. zweiten Abnahmebereichen der Gruppe elektrisch leitend verbunden sind. Die Abnahmeelemente dienen der Stromabfuhr der über die Einspeiseelemente und die Einspeisebereiche zugeführten elektrischen Ströme. Die Einspeiseelemente dienen als Hochstromzuführungen.

Die elektrisch leitende Verbindung zwischen den Einspeiseelementen und den Einspeisebereichen bzw. zwischen den Abnahmeelementen und den Abnahmebereichen kann mittels einer formschlüssigen Verbindung oder einer kraftschlüssigen Verbindung (z.B. Manschetten) oder einer stoffschlüssigen Verbindung (z.B. einer Schweißverbindung) erfolgen, wobei Kombinationen denkbar sind.

Der Reaktor umfasst weiterhin wenigstens eine elektrisch leitende erste Sternbrücke und wenigstens eine elektrisch leitende zweite Sternbrücke, wobei jede Gruppe einer ersten und einer zweiten Sternbrücke zugeordnet ist, wobei für jede Gruppe die der Gruppe zugeordneten ersten Abnahmeelemente elektrisch leitend mit der ersten Sternbrücke verbunden sind, welcher die Gruppe zugeordnet ist, und die der Gruppe zugeordneten zweiten Abnahmeelemente elektrisch leitend mit der zweiten Sternbrücke verbunden sind, welcher die Gruppe zugeordnet ist. Über die Sternbrücken wird ein Potentialausgleich zwischen den Phasen hergestellt.

Bevorzugt sind die wenigstens eine erste und die wenigstens eine zweite Sternbrücke außerhalb des Reaktorbehälters angeordnet. Ein Vorteil der Anordnung der Sternbrücken außerhalb des Reaktorbehälters (also außerhalb der Reaktorwand) ist, dass dort ein Material mit einer geringeren Hitzebeständigkeit verwendet werden kann als bei einer Anordnung innerhalb des Reaktorbehälters notwendig wäre. Es kann also ein Material mit einer hohen elektrischen Leitfähigkeit gewählt werden, z.B. Kupfer.

Entsprechend ist zwischen verschiedenen Phasen, d.h. zwischen verschiedenen Reaktionsrohren, der elektrische Widerstand über die Sternbrücke deutlich kleiner als der elektrische Widerstand über die Verbindung, die durch mit den Reaktionsrohren verbundene Fluidzufuhrrohre und Fluidzufuhrsammelrohre bzw. Fluidabfuhrrohre und Fluidabfuhrsammelrohre gebildet wird. Fluidzufuhrrohre sollen hier Rohre bezeichnen, durch die das Prozessfluid dem jeweiligen Reaktionsrohr zugeführt wird; entsprechend sollen Fluidabfuhrrohre Rohre bezeichnen, durch die das Prozessfluid von dem jeweiligen Reaktionsrohr abgeführt wird. Fluidzufuhrsammelrohre sind Rohre, die mit mehreren Zufuhrohren verbunden sind, um das von anderen Anlagenteilen kommende Prozessfluid auf die mehreren Reaktionsrohre aufzuteilen. Fluidabfuhrsammelrohre sind Rohre, die mit mehreren Abfuhrohren verbunden sind, um das von mehreren Reaktionsrohren kommende nach der chemischen Reaktion zur Weiterleitung in andere Anlagenteile zu sammeln. Die Fluidzufuhrrohre zusammen mit den Fluidzufuhrsammelrohren wird als Fluidzufuhrrohranordnung oder Zufuhrheader bezeichnet; die Fluidabfuhrrohre zusammen mit den Fluidabfuhrsammelrohren wird als Fluidabfuhrrohranordnung oder Abfuhrheader bezeichnet. Die Fluidzufuhrrohranordnung und die Fluidabfuhrrohranordnung bilden eine zur ersten bzw. zur zweiten Sternbrücke parallele elektrische Verbindung zwischen den Reaktionsrohren.

Bevorzugt beträgt der elektrische Widerstand zwischen zwei Reaktionsrohren in einer Gruppe über die erste und/oder zweite Sternbrücke maximal 50 %, weiter bevorzugt maximal 25 %, am meisten bevorzugt maximal 10 %, des dazu schaltungstechnisch parallelen elektrischen Widerstands über die Fluidzufuhrrohranordnung und/oder Fluidabfuhrrohranordnung.

Dies ist insbesondere vorteilhaft, da dann ein Potentialausgleich im Wesentlichen über die Sternbrücken erfolgt, so dass das Entstehen von Potentialunterschieden zwischen Fluidzufuhrrohranordnung und Fluidabfuhrrohranordnung, die zu elektrischen Strömen über die Anlagenteile außerhalb des Reaktors führen könnten, verringert wird.

Vorzugsweise sind die ersten und die zweiten Abnahmebereiche innerhalb des Reaktorbehälters angeordnet, wobei die ersten und die zweiten Abnahmeelemente eine längliche Form aufweisen und sich durch die Reaktorwand erstrecken; wobei weiter bevorzugt die Heizabschnitte vollständig innerhalb des Reaktorbehälter angeordnet sind. Thermische Verluste können so reduziert werden.

Bevorzugt sind, wenn einer der wenigstens einen ersten Sternbrücke mehrere Gruppen zugeordnet sind, diese mehreren Gruppen der gleichen zweiten Sternbrücke zugeordnet.

Weiterhin sind bevorzugt für eine Gruppe der wenigstens einen Gruppe, die erste und die zweite Sternbrücke, denen diese Gruppe zugeordnet, mittels einer Brückenverbindung elektrisch leitend miteinander verbunden. Mögliche Potentialunterschiede zwischen den Sternbrücken können so ausgeglichen werden. Diese Anordnung kann, wenn die wenigstens eine Gruppe mehrere Gruppen umfasst, für verschiedene Gruppen bestehen.

Bevorzugt umfasst der Reaktor eine oder mehrere Wechselstromquellen, wobei jede Wechselstromquelle an M Phasenleitungen Wechselstrom mit M Phasen bereitstellt; wobei jede Gruppe einer der einen oder mehreren Wechselstromquellen zugeordnet ist; wobei für jede Gruppe die der Gruppe zugeordneten Einspeiseelemente mit den Phasenleitungen der Wechselstromquelle verbunden sind, welcher die Gruppe zugeordnet ist.

Vorzugsweise ist in wenigstens einer der einen oder der mehreren Wechselstromquellen wenigstens ein Sternpunkt gebildet, wobei für eine Gruppe der wenigstens einen Gruppe, die erste und/oder die zweite Sternbrücke, denen die Gruppe zugeordnet ist, über einen oder mehrere Neutralleiter mit dem Sternpunkt der Wechselstromquelle verbunden ist, welcher die Gruppe zugeordnet ist. Dies ermöglicht gewisse Variationen der Stromstärke zwischen den Phasen.

Bevorzugt sind einer der einen oder der mehreren Wechselstromquellen mehrere Gruppen zugeordnet, wobei diese mehreren Gruppen der gleichen ersten Sternbrücke und der gleichen zweiten Sternbrücke zugeordnet sind.

Bevorzugt weist jeder der Heizrohrabschnitte mehrere durch einen oder mehrere Umkehrbögen miteinander verbundene gerade Rohrstrecken auf, wobei weiter bevorzugt die Anzahl der Rohrstrecken gerade ist. So werden Rohrschlangen gebildet, die eine kompakte Bauweise des Reaktors ermöglichen.

Bevorzugt befinden sich die Einspeisebereiche jeweils an einem der Umkehrbögen. Da sich die Umkehrbögen außen, in Nähe der Reaktorwand befinden, können die durch die Einspeiseelemente gebildeten Hochstromzuführungen relativ kurz gehalten werden.

Vorzugsweise sind die Abnahmeelemente mit elektrisch isolierten Halteeinrichtungen zur Verbindung mit einer Stützstruktur verbunden, wobei die Halteeinrichtungen in elektrisch isolierter Weise mit dem jeweiligen Abnahmeelement verbunden sind und/oder selbst elektrisch isolierend ausgeführt sind. Insbesondere, wenn sich die Abnahmeelemente durch die Reaktorwand erstrecken, können diese so auch eine Tragefunktion übernehmen. Die Stützstruktur ist z.B. Teil der Produktionsanlage, in der der Reaktor installiert ist.

Weiterhin ist vorzugsweise für jedes Reaktionsrohr wenigstens eine Trageeinrichtung zur Verbindung mit der Stützstruktur vorgesehen, das mit dem Reaktionsrohr verbunden ist, wobei die wenigstens eine Trageeinrichtung in elektrisch isolierter Weise mit dem Reaktionsrohr verbunden ist und/oder selbst elektrisch isolierend ausgeführt ist, und sich weiter bevorzugt in einem der Umkehrbögen befindet.

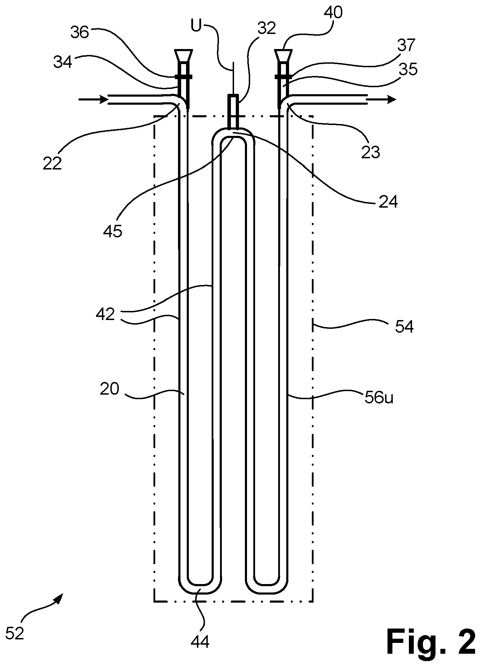

Vorzugsweise werden alle Durchführungen durch die Reaktorwand für Abnahmeelemente sowie für Fluidabfuhrrohe und Fluidzufuhrrohre mittels geeigneter Vorrichtungen, etwa einem Dichtbalg, gasdicht ausgeführt. Eine solche Vorrichtung zur Gasabdichtung ist elektrisch isolierend ausgeführt, so dass es zu keinem elektrischen Kontakt zwischen dem durchgeführten Bauteil und der Reaktorwand kommt. Eine solche Vorrichtung kann auch für die Durchführung der Stromeinspeisung (d.h. für die Einspeiseelemente) vorgesehen werden, insbesondere wenn nur geringe thermische Ausgleichsbewegungen auftreten, beispielsweise bei oben angeordneter Stromeinspeisung wie in Figur 2 gezeichnet.

Eine Phasenverschiebung zwischen jeweils zwei voneinander verschiedenen Phasen des Wechselstroms beträgt bevorzugt als Bogenmaß ausgedrückt 2π·k/M, wobei k jeweils eine ganze Zahl im Bereich von 1 bis M-1 ist. Bei symmetrischer Belastung heben sich so die Phasen im Sternpunkt bzw. in den Sternbrücken auf.

Bei der chemischen Reaktion kann es sich um eine chemische Reaktion handeln die zumindest teilweise bei einer Temperatur im Bereich von 200 °C bis 1700 °C, insbesondere von 300 °C bis 1400 °C bzw. von 400 °C bis 1100 °C, abläuft. Bevorzugt handelt es sich bei der chemischen Reaktion um eine chemische Reaktion, die zumindest teilweise bei einer Temperatur von mindestens 500 °C, weiter bevorzugt von mindestens 700 °C, abläuft, insbesondere zumindest teilweise in einem Temperaturbereich von 500 °C bzw. 700°C bis 1100 °C . Die bereitgestellten elektrischen Spannungen/Ströme sind entsprechend geeignet entsprechende Heizleistungen zu erbringen. Ebenso sind der Reaktor und die Stromquelle eingerichtet, chemische Reaktionen bei diesen Temperaturen durchzuführen und entsprechende Heizleistungen zu erbringen. Vorzugsweise ist die chemische Reaktion eine der folgenden: Steam-Cracking (Dampfspalten), Steam-Reforming (Dampfreformierung), Dry-Reforming (Trockenreformierung, Kohlendioxidreformierung), Propandehydrierung, allgemein Reaktionen mit Kohlenwasserstoffen, die zumindest teilweise bei mehr als 500°C durchgeführt werden.

Die vorliegende Erfindung wird nachfolgend zunächst unter Bezugnahme auf Reaktionsrohre und Reaktoren beschrieben, wie sie zum Steamcracken oder zur Dampfreformierung zum Einsatz kommen. Die Erfindung kann aber auch in anderen Reaktortypen zum Einsatz kommen. Generell kann, wie erwähnt, der erfindungsgemäß vorgeschlagene Reaktor zur Durchführung aller endothermen chemischen Reaktionen verwendet werden.

Die Erfindung wird nachfolgend unter Bezugnahme auf die beigefügten Figuren weiter erläutert, die Ausgestaltungen der vorliegenden Erfindung veranschaulichen.

### Kurze Beschreibung der Figuren

Figur 1 zeigt in einer perspektivischen Ansicht einen mit einer Wechselstromquelle verbundenen Reaktor gemäß einer bevorzugten Ausführungsform der Erfindung;
Figur 2 zeigt in einer Vorderansicht einen Reaktor gemäß einer anderen bevorzugten Ausführungsform der Erfindung; und
Figur 3 zeigt in einer Vorderansicht einen Reaktor gemäß einer weiteren bevorzugten Ausführungsform der Erfindung.

### Ausführliche Figurenbeschreibung

In den Figuren sind einander baulich oder funktionell entsprechende Elemente mit identischen oder ähnlichen Bezugszeichen veranschaulicht und werden der Übersichtlichkeit halber nicht wiederholt erläutert.

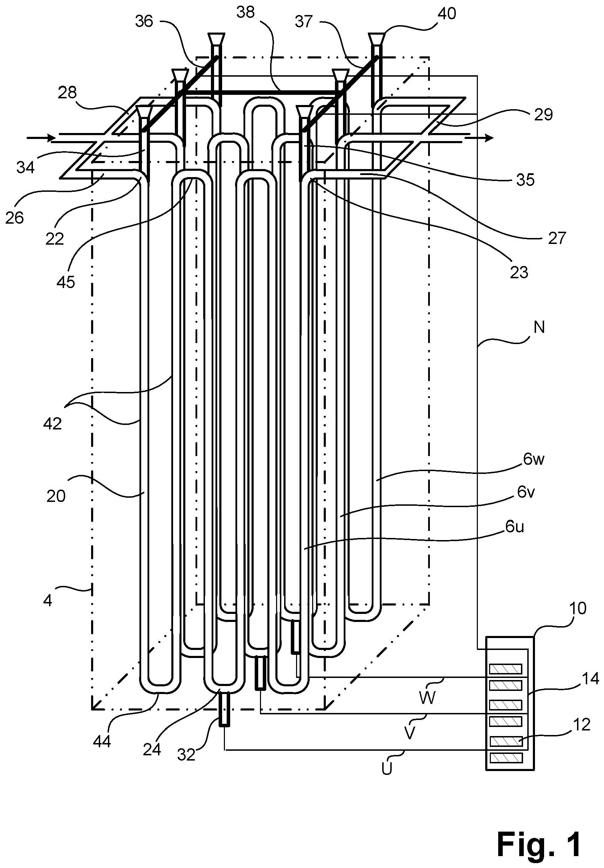

Figur 1 stellt in einer (größtenteils) perspektivischen Ansicht einen mit einer Wechselstromquelle 10 verbundenen Reaktor 2 gemäß einer bevorzugten Ausführungsform der Erfindung dar. Der Reaktor 2 weist eine thermisch isolierende Reaktorwand 4, deren Kontur in der Figur in als Strich-Punkt-Linie angedeutet ist, und mehrere Reaktionsrohre 6u, 6v, 6w auf, durch die das zu erhitzende Prozessfluid, in welchem die chemische Reaktion erfolgen soll, strömt. Durch die Reaktorwand wird ein Reaktorbehälter gebildet wie oben erläutert. Die Reaktionsrohre bilden eine Gruppe. Die Anzahl der Reaktionsrohre (in der Gruppe) entspricht der Anzahl der Phasen der Wechselstromquelle; hier beispielsweise 3 Phasen, wobei auch eine andere Anzahl größer gleich 2 möglich ist. Im Allgemeinen können mehrere Gruppen von Reaktionsrohren vorgesehen sein, wobei die Anzahl von Reaktionsrohren in jeder Gruppe der Anzahl der Phasen entspricht. In diesem allgemeinen Fall kann eine oder mehrere Wechselstromquellen vorgesehen sein, wobei die Phasenanschlüsse einer Wechselstromquelle auch mit den Reaktionsrohren in verschiedenen Gruppen verbunden sein können, d.h. es ist möglich, dass eine Wechselstromquelle eine oder mehrere Gruppen von Reaktionsrohren mit Wechselstrom versorgt, diese eine oder mehreren Gruppen sind der Wechselstromquelle zugeordnet, die sie mit Wechselstrom versorgt.

Jedes der Reaktionsrohre 6u, 6v, 6w weist einen Heizabschnitt 20 auf, der sich zwischen einem ersten Abnahmebereich 22 und einem zweiten Abnahmebereich 23 erstreckt. Der Übersichtlichkeit der Figur halber sind die Bezugszeichen hier und im Weiteren jeweils stellvertretend lediglich an einem von mehreren gleichartigen Elementen angebracht. Die Länge des Reaktionsrohrs zwischen erstem und zweiten Abnahmebereich 22, 23, d.h. des Heizabschnitts 20, wird als Heizlänge bezeichnet. Diese erstreckt sich hier über mehrere Windungen der Rohrschlange, die von jedem der Reaktionsrohre gebildet wird. Der Heizabschnitt 20 jedes Reaktorrohrs ist innerhalb der Reaktorwand 4 angeordnet.

Allgemeiner können sich die Abnahmebereiche 22, 23, anders als in Figur 1, auch außerhalb der Reaktorwand befinden, in diesem Fall, der in Figur 2 illustriert ist, erstrecken sich die Heizabschnitte durch die Reaktorwand (wobei der außerhalb der Reaktorwand gelegene Abschnitt der Heizabschnitte möglichst klein sein sollte, um thermische Verluste zu vermeiden), wobei sich die Heizabschnitte zumindest über 95 % ihrer Heizlänge innerhalb der Reaktorwand befinden sollten.

Die Reaktorwand 4 bildet eine im Wesentlichen (mit Ausnahme von Durchführungen, die der Zufuhr bzw. Abfuhr des Prozessgases, der Einspeisung bzw. Abnahme von Strom und Ähnlichem dienen) geschlossene Ummantelung, für den Bereich des Reaktors 2, durch den zumindest zum größten Teil die Heizabschnitte, in denen das Prozessfluid erhitzt werden soll, verlaufen. Die Zufuhr und die Abfuhr des Prozessfluids erfolgt mittels mit den Reaktionsrohren verbundenen Fluidzufuhrrohren 26 bzw. Fluidabfuhrrohren 27, die jeweils mit Fluidzufuhrsammelrohren 28 bzw. Fluidabfuhrsammelrohren 29 verbunden sind, über die das Prozessfluid aus anderen Produktionsanlagenteilen einer zu dem Reaktor geleitet und, nach der chemischen Reaktion, aus dem Reaktor zu diesen Produktionsanlagenteilen wieder abgeleitet wird. Die Fluidzufuhrrohre 26 bilden zusammen mit den Fluidzufuhrsammelrohren 28 sogenannte Zufuhrheader (Fluidzufuhranordnungen); die Fluidabfuhrrohre 27 bilden zusammen mit den Fluidabfuhrsammelrohren 29 sogenannte Abfuhrheader (Fluidabfuhranordnungen).

In etwa in der Mitte, allgemeiner zwischen 20 % und 80%, der Heizlänge zwischen dem ersten und dem zweiten Abnahmebereich 22, 23 weist jedes Reaktionsrohr 6u, 6v, 6w bzw. dessen jeweiliger Heizabschnitt 20 einen Einspeisebereich 24 auf. Jeder der Einspeisebereiche 24 ist elektrisch leitend mit einem elektrisch leitenden Einspeiseelement 32, verbunden, das wiederum mit einer Phase bzw. einer Phasenleitung U, V, W der Wechselstromquelle 10 elektrisch leitend verbunden ist. Die Einspeiseelemente 32, die sozusagen Stromanschlüsse darstellen, erstrecken sich durch die Reaktorwand 4 und weisen beispielsweise eine längliche Form auf, deren eines Ende mit dem jeweiligen Einspeisebereich 24 verbunden ist und deren anderes Ende mit einer der Phasenleitungen U, V, W verbunden ist. Die Einspeiseelemente, die mit Einspeisebereichen einer Gruppe verbunden sind, sind der jeweiligen Gruppe zugeordnet.

Die Wechselstromquelle 10 stellt bevorzugt mehrphasigen, hier dreiphasigen, Wechselstrom mit einer vorbestimmten Wechselspannung bereit. Allgemeiner ist auch eine andere Anzahl M von Phasen denkbar. Die Phasenverschiebungen zwischen den Phasen sind bevorzugt so gewählt, dass sich die Spannungen bzw. Ströme in einem Sternpunkt aufheben, d.h. die Phasenverschiebung zwischen zwei beliebigen Phasen kann als Bogenmaß ausgedrückt werden als 2π·k/M, bzw. in Grad als 360°·k/M, wobei k eine ganze Zahl im Bereich von 1 bis M-1 ist. Bei drei Phasen also 2π/3 bzw. 4π/3, entsprechend 120°bzw. 240°. Der Phasenunterschied zweier aufeinanderfolgender Phasen wird dann mit k=1 erhalten, d.h. als 2π/M.

Die Wechselstromquelle 10 kann als Wechselstromtransformator, insbesondere als Hochstromtransformator, ausgeführt sein. Die Primärseite, d.h. die Wechselstromzufuhr zur Wechselstromquelle 10, z.B. aus einem öffentlichen Versorgungsnetz oder einem Generator ist hier lediglich in Form von schraffierten Kästchen, die primärseitige Transformatorspulen 12 symbolisieren, dargestellt. Primärseitige Stromversorgungsleitungen sind in der Figur nicht dargestellt. Eine primärseitige Wechselspannung kann typischerweise einige hundert bis einige tausend Volt betragen, z.B. 400 V, 690 V oder 1,2 kV. Zwischen der Primärseite der Stromquelle 10 und einem etwaigen öffentlichen Versorgungsnetz oder einem Generator ist möglicherweise wenigstens ein weiterer nicht dargestellter Transformator (evtl. wenigstens ein Regeltransformator, der es ermöglicht, die sekundärseitige Wechselspannung zu steuern bzw. in einem gewissen Spannungsbereich einzustellen) zwischengeschaltet, um eine geeignete Eingangsspannung für den Hochstromtransformator zu erhalten. Statt oder zusätzlich zu diesem zwischengeschalteten wenigstens einem Transformator kann eine Einstellung der Eingangsspannung auch mittels einem oder mehreren Thyristor-Leistungsstellern erfolgen.

Sekundärseitig sind Phasenleitungen bzw. Phasenanschlüsse U, V, W vorgesehen, an denen die Phasen des Wechselstroms bereitgestellt werden. Die Phasenleitungen U, V, W werden über im einzelnen nicht dargestellte (es ist lediglich eingezeichnet, dass die Phasenleitungen durch die primärseitigen Transformatorspulen 12 verlaufen, um anzudeuten, dass sie elektromagnetisch miteinander in Wechselwirkung stehen) sekundärseitige Transformatorspulen mit elektrischer Energie versorgt. Die sekundärseitige Wechselspannung kann zweckmäßigerweise im Bereich bis 300 V liegen, etwa kleiner 150 V oder kleiner 100 V sein, auch kleiner oder gleich 50 V ist möglich. Die Sekundärseite ist von der Primärseite galvanisch getrennt.

In der Wechselstromquelle 10 sind die Phasenleitungen U, V, W miteinander verbunden, so dass ein Sternpunkt 14 der Wechselstromquelle 10 gebildet wird. Auf eine Erdung dieses Sternpunkts 14 wird bevorzugt verzichtet. Der Sternpunkt 14 ist gegebenenfalls mit einem Neutralleiter N verbunden.

Die ersten Abnahmebereiche 22 sind elektrisch leitend mit elektrisch leitenden ersten Abnahmeelementen 34 verbunden, welche wiederum miteinander elektrisch leitend durch eine elektrisch leitende erste Sternbrücke 36 verbunden sind. Die zweiten Abnahmebereiche 23 sind elektrisch leitend mit elektrisch leitenden zweiten Abnahmeelementen 35 verbunden, welche wiederum miteinander elektrisch leitend durch eine elektrisch leitende zweite Sternbrücke 37 verbunden sind. Die Abnahmeelemente, die mit Abnahmebereichen einer Gruppe verbunden sind, sind der jeweiligen Gruppe zugeordnet.

Bevorzugt erstrecken sich die ersten und die zweiten Abnahmeelemente 34, 35 durch die Reaktorwand 4, wobei weiter bevorzugt (wie in Figur 1 gezeigt) die erste und die zweite Sternbrücke 36, 37 außerhalb der Reaktorwand gelegen sind. Falls die Abnahmebereiche außerhalb der Reaktorwand liegen, erstrecken sich die Abnahmeelemente nicht durch die Reaktorwand.

Weiterhin sind vorzugsweise mit den Abnahmeelementen 34, 35 verbundene Halteeinrichtungen 40 vorgesehen, die mit den Abnahmeelementen 34, 35 in elektrisch isolierter Weise verbunden und/oder selbst elektrisch isolierend sind. Die Abnahmeelemente können dann eine längliche Form aufweisen, wobei ein Abnahmeende der Abnahmeelemente mit einem Abnahmebereich verbunden ist und ein gegenüberliegendes Halteende mit einer Halteeinrichtung verbunden ist. Die Halteeinrichtungen 40 sind so eingerichtet, dass sie mit einer Stützstruktur (nicht gezeigt) der Produktionsanlage, in der der Reaktor installiert wird, verbunden werden können. Sie dienen also dazu, insbesondere die Reaktorrohre (und mit diesen verbundene Elemente) zu halten bzw. zu tragen. Zusätzlich oder alternativ können mit den Heizabschnitten 20 verbundene Trageeinrichtungen (nicht gezeigt) vorgesehen sein, die mit den Heizabschnitten 20 in elektrisch isolierter Weise verbunden und/oder selbst elektrisch isolierend sind und die sich durch die Reaktorwand erstrecken, um mit der Stützstruktur verbunden zu werden, so dass die Reaktorrohre mittels der Trageeinrichtungen gehalten werden.

Der Wechselstrom wird also über die Einspeisebereiche 24 in die Heizabschnitte 20 eingespeist bzw. eingeleitet und aus diesen über die Abnahmebereiche 22, 23 abgenommen bzw. abgeleitet. Ausgehend vom Einspeisebereich 24 eines Heizabschnitts 20 fließt der elektrische Strom entsprechend der jeweiligen elektrischen Widerstände einerseits zum ersten Abnahmebereich 22 und andererseits zum zweiten Abnahmebereich 23. Da die verschiedenen Reaktionsrohre 6u, 6v, 6w mit verschiedenen Phasen U, V, W des Wechselstroms gespeist werden, kommt es bei entsprechender Phasenverschiebung zwischen den Phasen idealerweise (d.h. bei symmetrischer Belastung) zu einem Potentialausgleich in den beiden Sternbrücken 36, 37. Die Sternbrücken bilden schaltungstechnisch verbraucherseitige Sternpunkte.

Optional ist ein Neutralleiter N oder sind mehrere Neutralleiter vorgesehen, über den bzw. über die die Sternbrücken 36, 37 mit der Wechselstromquelle 10 elektrisch leitend verbunden sind.

Vorzugsweise ist weiterhin wenigstens eine elektrisch leitende Brückenverbindung 38 vorgesehen, die elektrisch leitend sowohl mit der ersten Sternbrücke 36 als auch mit der zweiten Sternbrücke 37 verbunden ist.

Die in Figur 1 dargestellten Reaktionsrohre 6u, 6v, 6w bzw. deren Heizabschnitte 20 sind als Rohrschlangen ausgebildet, d.h. umfassen gerade Rohrstrecken 42, die über untere Umkehrbögen 44 und obere Umkehrbögen 45 miteinander verbunden sind. Die Einspeisebereiche 24 sind in der gezeigten Ausführungsform jeweils an einem unteren Umkehrbogen vorgesehen. Die ersten und zweiten Abnahmebereiche 22, 23 sind hier beispielhaft an oberen Enden von Rohrstrecken 42 in Krümmerbereichen, in denen die entsprechenden Rohrstrecken 42 in die Fluidzufuhrrohre 22 bzw. Fluidabfuhrrohre 23 übergegen, angeordnet. Es ist allerdings ebenso möglich, die Abnahmebereiche und die Einspeisebereiche in anderen Bereichen der Rohrschlange vorzusehen.

Die Länge der Strecken zwischen Einspeisebereich 24 und dem ersten bzw. zweiten Abnahmebereich 22, 23 umfasst im gezeigten Beispiel jeweils drei gerade Rohrstrecken und ist damit deutlich länger als bei einer Rohrleitung (wie im Stand der Technik), die mit drei Phasen, genauer an jedem unteren Umkehrbogen mit einer Phase, verbunden ist und bei der die geraden Rohrstrecken an ihren entgegengesetzten Enden miteinander elektrisch leitend verbunden sind. D.h. die mit einer Phase verbundene Länge eines Reaktionsrohrs ist etwa dreimal so groß und weist einen entsprechend höheren Widerstand auf. Bei konstanter Stromstärke wird also je Phase und Reaktionsrohr eine entsprechend höhere Heizleistung erbracht, und insbesondere sind weniger Hochstromzuführungen notwendig.

Die Begriffe "oben"/"unten" beziehen sich lediglich auf die Orientierung in der Figur, dienen also dazu die entsprechenden Umkehrbögen zu unterscheiden. Die tatsächliche Orientierung (d.h. bezüglich dem Erdgravitationsfeld) der Rohrschlangen kann auch anders sein, z.B. könnten die Rohrschlangen liegen (Rohrstrecken verlaufen horizontal) oder die Anordnung könnte gegenüber der gezeigten auf dem Kopf stehen (Abnahmeelemente, Sternbrücken und Zu-/Abfuhrheader unten; Einspeiseelemente oben).

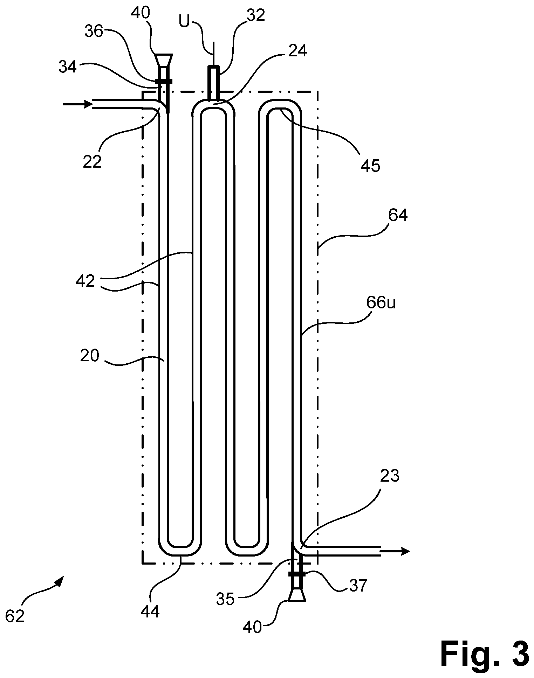

In Figur 1 weist jedes der Reaktorrohre 6u, 6v, 6w bzw. jeder Heizabschnitt 20 beispielhaft 6 gerade Rohrstrecken 42 auf, d.h. ist in 3 U-förmige Abschnitte geteilt, die über die oberen Umkehrbögen 45 miteinander verbunden sind. Hier ist auch eine andere Anzahl möglich, z.B. 2 gerade Rohrstrecken (1 U-förmiger Abschnitt), 4 gerade Rohrstrecken (2 U-förmige Abschnitte, vgl. Figur 2), 8 gerade Rohrstrecken (2 U-förmige Abschnitte), usw. Prinzipiell ist auch eine ungerade Anzahl von geraden Rohrstrecken möglich, vgl. Figur 3.

In Figur 1 befindet sich in jedem Heizabschnitt 20 der Einspeisebereich 24 genau in der Mitte der Heizlänge zwischen erstem Abnahmebereich 22 und zweitem Abnahmebereich 23. Auch hier sind Abweichungen möglich, d.h. die Länge (erste Heizlänge) des Heizabschnitts (erster Heizabschnitt) zwischen erstem Abnahmebereich 22 und Einspeisebereich 24 kann unterschiedlich sein von der Länge (zweite Heizlänge) des Heizabschnitts (zweiter Heizabschnitt) zwischen Einspeisebereich 24 und zweitem Abnahmebereich 23. Der elektrische Strom teilt sich dann entsprechend der elektrischen Widerstände dieser beiden Abschnitte (erster/zweiter Heizabschnitt) auf, so dass in beiden Abschnitten unterschiedliche Heizleistungen erzielt werden können.

In Figur 1 ist lediglich eine Gruppe mit mehreren (exemplarisch drei) Reaktionsrohren dargestellt. Im Allgemeinen kann ein Reaktor mehrere solcher Gruppen umfassen, wobei eine oder mehrere Wechselstromquellen vorgesehen sein können, von denen jede jeweils Wechselstrom für eine oder mehrere Gruppen bereitstellt, d.h. eine oder mehrere Gruppen sind der gleichen Wechselstromquelle zugeordnet. Es können ebenso mehrere erste Sternbrücken und mehrere zweite Sternbrücken vorgesehen sein, wobei eine einzelne erste/zweite Sternbrücke mit Abnahmeelementen, die verschiedenen Gruppen zugeordnet sind, verbunden sein kann, d.h. diese verschiedenen Gruppen sind der gleichen ersten/zweiten Sternbrücke zugeordnet, wobei vorzugsweise Gruppen, die der gleichen ersten Sternbrücke zugeordnet sind, auch der gleichen zweiten Sternbrücke zugeordnet sind. Bevorzugt sollten, wenn mehrere Gruppen einer derselben Wechselstromquelle zugeordnet sind, diese mehreren Gruppen auch derselben ersten Sternbrücke und derselben zweiten Sternbrücke zugeordnet sein.

Figur 2 stellt in einer Vorderansicht einen Reaktor 52 gemäß einer weiteren bevorzugten Ausführungsform der Erfindung dar. Diese Figur dient, wie auch Figur 3 dazu, unterschiedliche Ausführungen von Reaktionsrohren bzw. Rohrschlangen und entsprechende Anschlussmöglichkeiten für die Stromversorgung zu illustrieren, es daher nur lediglich eines der Reaktionsrohre und die Anschlüsse daran dargestellt. Die weiteren Reaktionsrohre (entsprechend der Anzahl von Phasen der Wechselstromquelle), die im Prinzip senkrecht zur Zeichenebene vom gezeigten Reaktionsrohr beabstandet angeordnet (parallelverschoben) sind, sind entsprechend dem gezeigten gestaltet, mit dem Unterschied, dass deren Einspeisebereiche mit verschiedenen Phasen verbunden sind. Einzelheiten bzw. Eigenschaften der Elemente werden im Folgenden, falls nicht unterschiedlich von denjenigen in Figur 1, nicht nochmals wiederholt; hier gelten die Erläuterungen im Zusammenhang mit der Beschreibung von Figur 1.

Der Reaktor 52 weist wieder eine Reaktorwand 54 und (in einer Richtung senkrecht zur Zeichenebene angeordnete) Reaktionsrohre auf, wobei in der Vorderansicht stellvertretend lediglich ein Reaktionsrohr 56u sichtbar ist. Jedes der Reaktionsrohre 56u weist einen Heizabschnitt 20 mit einer Heizlänge auf, der sich zwischen einem jeweiligen ersten Abnahmebereich 22, der mit einem ersten Abnahmeelement 34 verbunden ist, und einem jeweiligen zweiten Abnahmebereich 23, der mit einem zweiten Abnahmeelement 35 verbunden ist, erstreckt. Die ersten Abnahmeelemente 34 sind durch eine erste Sternbrücke 36, die sich senkrecht zur Zeichenebene erstreckt, verbunden; die zweiten Abnahmeelemente 35 sind durch eine zweite Sternbrücke 37, die sich ebenfalls senkrecht zur Zeichenebene erstreckt, verbunden.

Jedes Reaktionsrohr 56u bzw. jeder Heizabschnitt besteht aus geraden Rohrstrecken 42, die durch untere Umkehrbögen 44 und einen oberen Umkehrbogen 45 miteinander verbunden sind, um ein Rohrschlange zu bilden, die aus 4 geraden Rohrstrecken (2 U-förmigen Abschnitten) besteht; ähnliche Anordnungen sind ebenso mit einer anderen Anzahl von Rohrstrecken möglich, z.B. mit 8 oder 12 geraden Rohrstrecken (4 oder 6 U-förmigen Abschnitten), usw.

Im Unterschied zur Figur 1 befindet sich der Einspeisebereich 24 hier nicht in einem unteren Umkehrbogen sondern im oberen Umkehrbogen 45; also wieder in der Mitte des Heizabschnitts. D.h. die Abnahmebereiche 22, 23 und die Einspeisebereiche 24 befinden sich auf derselben Seite (oben) des Reaktors. Der Einspeisebereich 24 des hier sichtbaren Reaktorrohrs 56u ist mit einer Phasenleitung U einer nicht weiter dargestellten Wechselstromquelle verbunden. Entsprechend sind die Einspeisebereiche der weiteren, nicht sichtbaren Reaktorrohre mit anderen Phasenleitungen der Wechselstromquelle verbunden. Ein Potentialausgleich der verschiedenen Phasen findet wieder über die Sternbrücken 36, 37 statt, so dass die Sternbrücken schaltungstechnisch wieder verbraucherseitige Sternpunkte bilden.

Unabhängig von der Form der Rohrschlangen befinden sich in der Ausführungsform der Figur 2 die ersten und zweiten Abnahmebereiche 22, 23 außerhalb der Reaktorwand 54. Selbstverständlich ist auch eine Gestaltung wie bei Figur 1 möglich, bei der sich die Abnahmebereiche innerhalb der Reaktorwand befinden.

Es können auch wieder eine elektrisch leitende Brückenverbindung, die elektrisch leitend sowohl mit der ersten Sternbrücke 36 als auch mit der zweiten Sternbrücke 37 verbunden ist, und/oder ein oder mehrere Neutralleiter, die die Sternbrücken mit dem Sternpunkt der Wechselstromquelle verbinden, vorgesehen sein. Ebenso können Halteeinrichtungen 40 und/oder Trageeinrichtungen vorgesehen sein. Diese Elemente sind in Figur 2 größtenteils nicht gezeigt.

Figur 3 stellt in einer Vorderansicht einen Reaktor 62 gemäß einer weiteren bevorzugten Ausführungsform der Erfindung dar. Diese Figur dient, wie auch Figur 2 dazu, unterschiedliche Ausführungen von Reaktionsrohren bzw. Rohrschlangen und entsprechende Anschlussmöglichkeiten für die Stromversorgung zu illustrieren, es daher nur lediglich eines der Reaktionsrohre und die Anschlüsse daran dargestellt. Die weiteren Reaktionsrohre (entsprechend der Anzahl von Phasen der Wechselstromquelle), die im Prinzip senkrecht zur Zeichenebene vom gezeigten Reaktionsrohr beabstandet angeordnet (parallelverschoben) sind, sind entsprechend dem gezeigten gestaltet, mit dem Unterschied, dass deren Einspeisebereiche mit verschiedenen Phasen verbunden sind. Einzelheiten bzw. Eigenschaften der Elemente werden im Folgenden, falls nicht unterschiedlich von denjenigen in Figur 1, nicht nochmals wiederholt; hier gelten die Erläuterungen im Zusammenhang mit der Beschreibung von Figur 1.

Der Reaktor 62 weist wieder eine Reaktorwand 64 und (in einer Richtung senkrecht zur Zeichenebene angeordnete) Reaktionsrohre auf, wobei in der Vorderansicht stellvertretend lediglich ein Reaktionsrohr 66u sichtbar ist. Jedes der Reaktionsrohre 66u weist einen Heizabschnitt 20 mit einer Heizlänge auf, der sich zwischen einem jeweiligen ersten Abnahmebereich 22, der mit einem ersten Abnahmeelement 34 verbunden ist, und einem jeweiligen zweiten Abnahmebereich 23, der mit einem zweiten Abnahmeelement 35 verbunden ist, erstreckt. Die ersten Abnahmeelemente 34 sind durch eine erste Sternbrücke 36, die sich senkrecht zur Zeichenebene erstreckt, verbunden; die zweiten Abnahmeelemente 35 sind durch eine zweite Sternbrücke 37, die sich ebenfalls senkrecht zur Zeichenebene erstreckt, verbunden.

Jedes Reaktionsrohr 56u bzw. jeder Heizabschnitt besteht aus geraden Rohrstrecken 42, die durch untere Umkehrbögen 44 und obere Umkehrbögen 45 miteinander verbunden sind, um ein Rohrschlange zu bilden. Im Unterschied zu den vorherigen Ausführungsformen ist eine ungerade Anzahl von geraden Rohrstrecken 42 vorgesehen (hier beispielsweise 5, wobei auch eine andere ungerade Anzahl denkbar ist). Dies führt einerseits dazu, dass die ersten Abnahmebereiche 22 (und entsprechend die ersten Abnahmeelemente 34) oben angeordnet sind, während die zweiten Abnahmebereiche 23 (und entsprechend die zweiten Abnahmeelemente 35) unten angeordnet sind. Siehe die obenstehenden Erläuterungen zu den Begriffen "unten"/"oben".

Andererseits führt dies auch dazu, das der Einspeisebereich 23, der wieder in einem Umkehrbogen angeordnet ist (exemplarisch in einem oberen Umkehrbogen 45, wobei eine Anordnung in einem unteren Umkehrbogen 44 ebenso möglich ist), sich nicht in der Mitte des Heizabschnitts 20 befindet, d.h. nicht bei 50 % der Heizlänge. Sondern, dass die Länge des Abschnitts zwischen Einspeisebereich 23 und erstem Abnahmebereich 22 etwas kürzer ist als die Länge des Abschnitts zwischen Einspeisebereich 23 und zweitem Abnahmebereich 24. Prinzipiell wäre es (bei allen Ausführungsformen) auch möglich, den Einspeisebereich in einer geraden Rohrstrecke anzuordnen, die Anordnung in einem Umkehrbogen ist allerdings bevorzugt, da dies im Allgemeinen darin resultiert, dass die Länge, und damit der Widerstand, der Einspeiseelemente, die elektrische Ströme mit hoher Stromstärke (z.B. mehrere kA) leiten müssen, was zu einer entsprechend hohen Verlustleistung führt, relativ gering gehalten werden kann.

Die Abnahmebereiche der Ausführungsform der Figur 3 sind innerhalb der Reaktorwand 54 gelegen, so dass sich die Abnahmeelemente durch die Reaktorwand erstrecken, wobei klarerweise auch wieder eine Ausführung denkbar ist, in der die Abnahmebereiche außerhalb der Reaktorwand angeordnet sind.

Es können auch wieder ein oder mehrere Neutralleiter, die die Sternbrücken mit der dem Sternpunkt der Wechselstromquelle verbinden, vorgesehen sein (in Figur 3 nicht gezeigt). Ebenso können Halteeinrichtungen 40 und/oder Trageeinrichtungen (nicht gezeigt) vorgesehen sein.

## Patentansprüche

1. Reaktor (2; 52; 62) zur Durchführung einer chemischen Reaktion in einem Prozessfluid unter Verwendung mehrphasigen Wechselstroms zur Erhitzung des Prozessfluids, wobei der Wechselstrom eine Anzahl M von Phasen aufweist, wobei M eine ganze Zahl größer eins ist, umfassend
einen durch eine thermisch isolierende Reaktorwand (4; 54; 64) gebildeten Reaktorbehälter;
wenigstens eine Gruppe mit mehreren Reaktionsrohren (6u, 6v, 6w; 56; 66), wobei jede Gruppe M Reaktionsrohre umfasst, wobei jedes der Reaktionsrohre einen elektrisch beheizbaren Heizabschnitt (20) aufweist, der sich mit einer jeweiligen Heizlänge zwischen einem ersten und einem zweiten Abnahmebereich (22, 23) des jeweiligen Reaktionsrohrs erstreckt, wobei die Heizabschnitte zumindest für 95 % ihrer Heizlänge innerhalb des Reaktorbehälters angeordnet sind und in einem Bereich, der sich von 20 % bis 80 % ihrer Heizlänge erstreckt, jeweils einen Einspeisebereich (24) aufweisen;
elektrisch leitende Einspeiseelemente (32), wobei jeder Gruppe M Einspeiseelemente zugeordnet sind, die mit den Einspeisebereichen der Gruppe elektrisch leitend verbunden sind, wobei in verschiedene einer Gruppe zugeordnete Einspeiseelemente verschiedene Phasen des Wechselstroms eingespeist werden oder einspeisbar sind;
elektrisch leitende erste und zweite Abnahmeelemente (34, 35), wobei jeder Gruppe M erste Abnahmeelemente und M zweite Abnahmeelemente zugeordnet sind, die mit den ersten Abnahmebereichen bzw. zweiten Abnahmebereichen der Gruppe elektrisch leitend verbunden sind;
wenigstens eine elektrisch leitende erste Sternbrücke (36) und wenigstens eine elektrisch leitende zweite Sternbrücke (37), wobei jede Gruppe einer ersten und einer zweiten Sternbrücke zugeordnet ist, wobei für jede Gruppe die der Gruppe zugeordneten ersten Abnahmeelemente elektrisch leitend mit der ersten Sternbrücke verbunden sind, welcher die Gruppe zugeordnet ist, und die der Gruppe zugeordneten zweiten Abnahmeelemente elektrisch leitend mit der zweiten Sternbrücke verbunden sind, welcher die Gruppe zugeordnet ist.

2. Reaktor nach Anspruch 1, wobei die wenigstens eine erste und die wenigstens eine zweite Sternbrücke (36, 37) außerhalb des Reaktorbehälters angeordnet sind.

3. Reaktor nach Anspruch 2, wobei die ersten und die zweiten Abnahmebereiche (22, 23) innerhalb des Reaktorbehälters angeordnet sind und wobei die ersten und die zweiten Abnahmeelemente (34, 35) eine längliche Form aufweisen und sich durch die Reaktorwand erstrecken; wobei bevorzugt die Heizabschnitte (20) vollständig innerhalb des Reaktorbehälters angeordnet sind.

4. Reaktor nach einem der vorstehenden Ansprüche, wobei, wenn einer der wenigstens einen ersten Sternbrücke mehrere Gruppen zugeordnet sind, diese mehreren Gruppen der gleichen zweiten Sternbrücke zugeordnet sind.

5. Reaktor nach einem der vorstehenden Ansprüche, wobei für eine Gruppe der wenigstens einen Gruppe, die erste und die zweite Sternbrücke (36, 37), denen diese Gruppe zugeordnet ist, mittels einer Brückenverbindung (38) elektrisch leitend miteinander verbunden sind.

6. Reaktor nach einem der vorstehenden Ansprüche, umfassend eine oder mehrere Wechselstromquellen (10), wobei jede Wechselstromquelle an M Phasenleitungen (U, V, W) Wechselstrom mit M Phasen bereitstellt; wobei jede Gruppe einer der einen oder mehreren Wechselstromquellen zugeordnet ist; wobei für jede Gruppe die der Gruppe zugeordneten Einspeiseelemente mit den Phasenleitungen der Wechselstromquelle verbunden sind, welcher die Gruppe zugeordnet ist.

7. Reaktor nach Anspruch 6, wobei in wenigstens einer der einen oder der mehreren Wechselstromquellen wenigstens ein Sternpunkt (14) gebildet ist, wobei für eine Gruppe der wenigstens einen Gruppe, die erste und/oder die zweite Sternbrücke, denen die Gruppe zugeordnet ist, über einen oder mehrere Neutralleiter (N) mit dem Sternpunkt der Wechselstromquelle verbunden ist, welcher die Gruppe zugeordnet ist.

8. Reaktor nach einem der Ansprüche 6 oder 7, wobei einer der einen oder der mehreren Wechselstromquellen mehrere Gruppen zugeordnet sind, wobei diese mehreren Gruppen der gleichen ersten Sternbrücke und der gleichen zweiten Sternbrücke zugeordnet sind.

9. Reaktor nach einem der vorstehenden Ansprüche, wobei jeder der Heizabschnitte mehrere durch einen oder mehrere Umkehrbögen (44, 45) miteinander verbundene gerade Rohrstrecken (42) aufweist; wobei bevorzugt die Anzahl der Rohrstrecken gerade ist.

10. Reaktor nach Anspruch 9, wobei sich die Einspeisebereiche (22, 23) jeweils an einem der Umkehrbögen (44) befinden.

11. Reaktor nach einem der vorstehenden Ansprüche, wobei die Abnahmeelemente (34, 35) mit elektrisch isolierten Halteeinrichtungen (40) zur Verbindung mit einer Stützstruktur verbunden sind, wobei die Halteeinrichtungen in elektrisch isolierter Weise mit dem jeweiligen Abnahmeelement verbunden sind und/oder selbst elektrisch isolierend ausgeführt sind.

12. Reaktor nach einem der vorstehenden Ansprüche, wobei für jedes Reaktionsrohr wenigstens eine Trageeinrichtung zur Verbindung mit der Stützstruktur vorgesehen ist, das mit dem Reaktionsrohr verbunden ist, wobei die wenigstens eine Trageeinrichtung in elektrisch isolierter Weise mit dem Reaktionsrohr verbunden ist und/oder selbst elektrisch isolierend ausgeführt ist und sich, falls abhängig von Anspruch 9, bevorzugt in einem der Umkehrbögen befindet.

13. Reaktor nach einem der vorstehenden Ansprüche, wobei eine Phasenverschiebung zwischen jeweils zwei voneinander verschiedenen Phasen des Wechselstroms als Bogenmaß ausgedrückt 2π·k/M beträgt, wobei k jeweils eine ganze Zahl im Bereich von 1 bis M-1 ist.

14. Reaktor nach einem der vorstehenden Ansprüche, wobei es sich bei der chemischen Reaktion um eine chemische Reaktion handelt, die zumindest teilweise bei einer Temperatur von mindestens 500 °C abläuft; wobei die chemische Reaktion bevorzugt eine der folgenden Reaktionen ist: Dampfspalten, Dampfreformierung, Trockenreformierung, Propandehydrierung, eine Reaktion mit Kohlenwasserstoffen, die zumindest teilweise bei mehr als 500°C durchgeführt wird.

## Claims

1. Reactor (2; 52; 62) for carrying out a chemical reaction in a process fluid using multiphase alternating current for heating the process fluid, wherein the alternating current has a number M of phases, wherein M is an integer greater than one, comprising
a reactor container formed by a thermally insulating reactor wall (4; 54; 64);
at least one group comprising a plurality of reaction tubes (6u, 6v, 6w; 56; 66), wherein each group comprises M reaction tubes, wherein each of the reaction tubes has an electrically heatable heating portion (20) extending with a respective heating length between a first and a second removal region (22, 23) of the respective reaction tube, wherein the heating portions are arranged, at least for 95% of their heating length, within the reactor container and each have a feed region (24) in a region extending from 20% to 80% of their heating length;
electrically conductive feed elements (32), wherein each group is assigned M feed elements which are electrically conductively connected to the feed regions of the group, wherein different phases of the alternating current are fed or can be fed into different feed elements assigned to a group;
electrically conductive first and second removal elements (34, 35), wherein each group is assigned M first removal elements and M second removal elements which are electrically conductively connected to the first removal regions and/or the second removal regions of the group;
at least one electrically conductive first star bridge (36) and at least one electrically conductive second star bridge (37), wherein each group is assigned to a first and a second star bridge, wherein, for each group, the first removal elements assigned to the group are electrically conductively connected to the first star bridge to which the group is assigned, and the second removal elements assigned to the group are electrically conductively connected to the second star bridge to which the group is assigned.

2. Reactor according to claim 1, wherein the at least one first and the at least one second star bridge (36, 37) are arranged outside the reactor container.

3. Reactor according to claim 2, wherein the first and second removal regions (22, 23) are arranged within the reactor container, and wherein the first and second removal elements (34, 35) have an elongate shape and extend through the reactor wall; wherein the heating portions (20) are preferably arranged completely within the reactor container.

4. Reactor according to any of the preceding claims, wherein when one of the at least one first star bridges is assigned a plurality of groups, said plurality of groups is assigned to the same second star bridge.

5. Reactor according to any of the preceding claims, wherein, for a group of the at least one group, the first and the second star bridge (36, 37) to which said group is assigned are electrically conductively connected to one another by means of a bridge connection (38).

6. Reactor according to any of the preceding claims, comprising one or more alternating current sources (10), wherein each alternating current source provides alternating current having M phases to M phase lines (U, V, W); wherein each group is assigned to one of the one or more alternating current sources; wherein, for each group, the feed elements assigned to the group are connected to the phase lines of the alternating current source to which the group is assigned.

7. Reactor according to claim 6, wherein at least one star point (14) is formed in at least one of the one or more alternating current sources, wherein, for a group of the at least one group, the first and/or second star bridge to which the group is assigned is connected via one or more neutral conductors (N) to the star point of the alternating current source to which the group is assigned.

8. Reactor according to either of claims 6 and 7, wherein a plurality of groups are assigned to one of the one or more alternating power sources, wherein said plurality of groups are assigned to the same first star bridge and the same second star bridge.

9. Reactor according to any of the preceding claims, wherein each of the heating portions has a plurality of straight tube sections (42) connected to one another by one or more U-bends (44, 45), wherein the number of tube sections is preferably even.

10. Reactor according to claim 9, wherein the feed regions (22, 23) are each located at one of the U-bends (44).

11. Reactor according to any of the preceding claims, wherein the removal elements (34, 35) are connected to electrically insulated holding devices (40) for connection to a support structure, wherein the holding devices are connected in an electrically insulated manner to the respective removal element and/or are themselves designed to be electrically insulating.

12. Reactor according to any of the preceding claims, wherein, for each reaction tube, at least one bearing device is provided for connection to the support structure, which is connected to the reaction tube, wherein the at least one bearing device is connected in an electrically insulating manner to the reaction tube and/or is itself designed to be electrically insulating and, if dependent on claim 9, is preferably located in one of the U-bends.

13. Reactor according to any of the preceding claims, wherein a phase shift between two mutually different phases of the alternating current, expressed as a circular measure, is 2π·k/M, where k is an integer in the range from 1 to M-1.

14. Device according to claim 1, wherein the chemical reaction is a chemical reaction occurring at least partly at a temperature of at least 500°C; wherein the chemical reaction is preferably one of the following reactions: steam cracking, steam reforming, dry reforming, propane dehydrogenation, a reaction with hydrocarbons which is carried out at least partly at more than 500°C.

## Revendications

1. Réacteur (2 ; 52 ; 62) pour la réalisation d'une réaction chimique dans un fluide de processus en utilisant un courant alternatif polyphasé pour le chauffage du fluide de processus, le courant alternatif présentant un nombre M de phases, M représentant un nombre entier supérieur à un, comprenant
une cuve de réacteur formée par une paroi de réacteur (4 ; 54 ; 64) thermiquement isolante ;
au moins un groupe comportant plusieurs tubes de réaction (6u, 6v, 6w ; 56 ; 66), chaque groupe comprenant M tubes de réaction, chacun des tubes de réaction présentant une section de chauffage (20) pouvant être chauffée électriquement, laquelle s'étend avec une longueur de chauffage respective entre une première et une seconde zone d'enlèvement (22, 23) du tube de réaction respectif, les sections de chauffage étant disposées à l'intérieur de la cuve de réacteur sur au moins 95 % de leur longueur de chauffage et présentant respectivement une zone d'alimentation (24) dans une zone qui s'étend de 20 % à 80 % de leur longueur de chauffage ;
des éléments d'alimentation (32) électriquement conducteurs, M éléments d'alimentation étant associés à chaque groupe, lesquels éléments sont reliés de manière électriquement conductrice aux zones d'alimentation du groupe, différentes phases du courant alternatif étant alimentées ou pouvant être alimentées à différents éléments d'alimentation associés à un groupe ;
des premier et second éléments d'enlèvement (34, 35) électriquement conducteurs, M premiers éléments d'enlèvement et M seconds éléments d'enlèvement étant associés à chaque groupe, lesquels éléments sont reliés de manière électriquement conductrice aux premières zones d'enlèvement ou aux secondes zones d'enlèvement du groupe ;
au moins un premier pont neutre (36) électriquement conducteur et au moins un second pont neutre (37) électriquement conducteur, chaque groupe étant associé à un premier et à un second pont neutre, pour chaque groupe, les premiers éléments d'enlèvement associés au groupe étant reliés de manière électriquement conductrice au premier pont neutre auquel le groupe est associé, et les seconds éléments d'enlèvement associés au groupe étant reliés de manière électriquement conductrice au second pont neutre auquel le groupe est associé.

2. Réacteur selon la revendication 1, l'au moins un premier et l'au moins un second pont neutre (36, 37) étant disposés en dehors de la cuve de réacteur.

3. Réacteur selon la revendication 2, les premières et les secondes zones d'enlèvement (22, 23) étant disposées à l'intérieur de la cuve de réacteur et les premiers et les seconds éléments d'enlèvement (34, 35) présentant une forme allongée et s'étendant à travers la paroi de réacteur ; les sections de chauffage (20) étant de préférence disposées entièrement à l'intérieur de la cuve de réacteur.

4. Réacteur selon l'une quelconque des revendications précédentes, lorsque plusieurs groupes sont associés à l'un de l'au moins un premier pont neutre, lesdits plusieurs groupes étant associés au même second pont neutre.

5. Réacteur selon l'une quelconque des revendications précédentes, pour un groupe de l'au moins un groupe, le premier et le second pont neutre (36, 37) auxquels ledit groupe est associé étant reliés de manière électriquement conductrice entre eux au moyen d'une liaison formant pont (38).

6. Réacteur selon l'une quelconque des revendications précédentes, comprenant une ou plusieurs sources de courant alternatif (10), chaque source de courant alternatif fournissant à M lignes de phase (U, V, W) un courant alternatif comportant M phases ; chaque groupe étant associé à l'une des une ou plusieurs sources de courant alternatif ; pour chaque groupe, les éléments d'alimentation associés au groupe étant reliés aux lignes de phase de la source de courant alternatif à laquelle le groupe est associé.

7. Réacteur selon la revendication 6, au moins un point neutre (14) étant formé dans au moins l'une des une ou plusieurs sources de courant alternatif, pour un groupe de l'au moins un groupe, le premier et/ou le second pont neutre auquel le groupe est associé étant relié, par l'intermédiaire d'un ou de plusieurs conducteurs neutres (N), au point neutre de la source de courant alternatif à laquelle le groupe est associé.

8. Réacteur selon l'une des revendications 6 ou 7, plusieurs groupes étant associés à l'une des une ou plusieurs sources de courant alternatif, lesdits plusieurs groupes étant associés au même premier pont neutre et au même second pont neutre.

9. Réacteur selon l'une quelconque des revendications précédentes, chacune des sections de chauffage présentant plusieurs tronçons de tube (42) droits reliés entre eux par un ou plusieurs coudes en U (44, 45) ; le nombre de tronçons de tube étant de préférence pair.

10. Réacteur selon la revendication 9, les zones d'alimentation (22, 23) se trouvant respectivement au niveau d'un des coudes en U (44).

11. Réacteur selon l'une quelconque des revendications précédentes, les éléments d'enlèvement (34, 35) étant reliés à des dispositifs de retenue (40) isolés électriquement pour la liaison à une structure de soutien, les dispositifs de retenue étant reliés de façon isolée électriquement à l'élément d'enlèvement respectif et/ou étant réalisés eux-mêmes de manière électriquement isolante.

12. Réacteur selon l'une quelconque des revendications précédentes, pour chaque tube de réaction, au moins un dispositif de support étant prévu pour la liaison à la structure de soutien, lequel dispositif de support est relié au tube de réaction, l'au moins un dispositif de support étant relié de façon isolée électriquement au tube de réaction et/ou étant réalisé lui-même de manière électriquement isolante et se trouvant de préférence dans l'un des coudes en U lorsqu'il dépend de la revendication 9.

13. Réacteur selon l'une quelconque des revendications précédentes, un déphasage entre respectivement deux phases du courant alternatif différentes l'une de l'autre, lequel déphasage est exprimé en radians, étant de 2π-k/M, k représentant respectivement un nombre entier compris dans la plage de 1 à M-1.

14. Réacteur selon l'une quelconque des revendications précédentes, la réaction chimique étant une réaction chimique qui se déroule au moins partiellement à une température d'au moins 500 °C ; la réaction chimique étant de préférence l'une des réactions suivantes : vapocraquage, vaporeformage, reformage à sec, déshydrogénation du propane, une réaction avec des hydrocarbures réalisée au moins partiellement à plus de 500 °C.
